(19) **Europäisches Patentamt**
**European Patent Office**
**Office européen des brevets**

(11) **EP 1 695 467 B1**

(12) **EUROPÄISCHE PATENTSCHRIFT**

(45) Veröffentlichungstag und Bekanntmachung des Hinweises auf die Patenterteilung:
**25.02.2009 Patentblatt 2009/09**

(21) Anmeldenummer: **04804860.7**

(22) Anmeldetag: **15.12.2004**

(51) Int Cl.:
***H04B 10/17*** *(2006.01)*        ***H01S 3/131*** *(2006.01)*

(86) Internationale Anmeldenummer:
**PCT/EP2004/053511**

(87) Internationale Veröffentlichungsnummer:
**WO 2005/057813 (23.06.2005 Gazette 2005/25)**

(54) **VERFAHREN ZUR REGELUNG DER PUMPLEISTUNG EINES OPTISCHEN VERSTÄRKERS**

METHOD FOR REGULATING THE PUMP POWER OF AN OPTICAL AMPLIFIER

PROCEDE POUR REGULER LA PUISSANCE DE POMPAGE D'UN AMPLIFICATEUR OPTIQUE

(84) Benannte Vertragsstaaten:
**FR**

(30) Priorität: **15.12.2003 DE 10358698**

(43) Veröffentlichungstag der Anmeldung:
**30.08.2006 Patentblatt 2006/35**

(73) Patentinhaber: **Nokia Siemens Networks GmbH & Co. KG**
**81541 München (DE)**

(72) Erfinder: **RAPP, Lutz**
**82041 Deisenhofen (DE)**

(56) Entgegenhaltungen:
**EP-A- 1 079 481        US-A- 6 163 399**
**US-B1- 6 414 788**

**Beschreibung**

Die Erfindung betrifft ein Verfahren zur Regelung der Pumpleistung eines optischen Verstärkers nach dem Oberbegriff des Patentanspruches 1.

Die Wellenlängenmultiplextechnik (WDM-Technik) bietet die Möglichkeit, an unterschiedlichen Orten befindliche Sender und Empfänger direkt über optische Pfade eines Netzwerks zu verbinden, ohne dass an Knotenstellen eine elektro-optische Wandlung erforderlich ist. In Zukunft wird es auch möglich sein, optische Pfade mit Hilfe optischer Schaltmatrizen beliebig auf- und abzubauen. Dies ermöglicht im Vergleich zum jetzigen Stand der Technik deutliche Kostenersparnisse ohne Abstriche bei der Flexibilität der Verbindungen machen zu müssen.

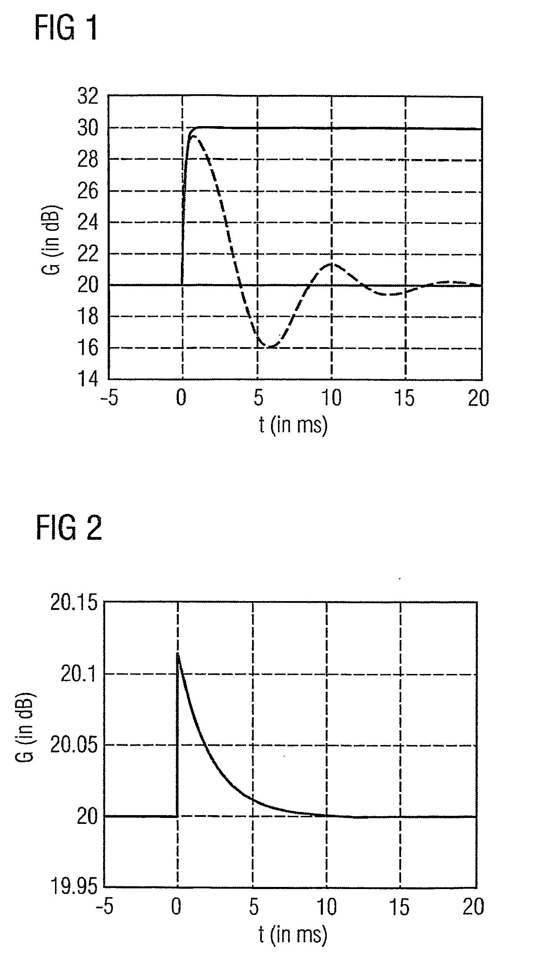

Durch das Ab- und Zuschalten von übertragenen Signalen in Kanälen eines Multiplex-Übertragungssystems treten allerdings starke Leistungsschwankungen auf den einzelnen Teilstrecken auf. Um Bitfehler am Ende der Strecke zu vermeiden, darf sich der Verstärkergewinn für die weiterhin übertragenen oder hinzugeschalteten Kanäle nicht ändern. Fig. 1 zeigt den mittleren Gewinn G aller Kanäle über der Zeit t für eine einzelne Verstärkerstufe und für zwei verschiedene Fälle, wobei angenommen wurde, dass zum Zeitpunkt Null die Eingangsleistung durch Abschalten von Kanälen um 19db , abnimmt.

Hält man die Pumpleistung konstant (siehe die durchgezogene Kurve), so steigt der Gewinn G von 20dB vor dem Abschaltvorgang auf einen konstanten Wert von 30dB nach dem Abschaltvorgang an. Eine weitere hier gestrichelte Kurve zeigt zur Illustration den zeitlichen Verlauf des Gewinnes bei Verwendung eines einfachen Integralreglers, der dafür sorgt, dass der mittlere Gewinn nach einem Einschwingvorgang mit einer Dauer von über 20ms wieder 20dB beträgt. Die gezeigten Über- und Unterschwinger können durch komplexere Regelungen deutlich reduziert werden, lassen sich aber nicht vollständig eliminieren. In einer Kaskade von Verstärkern kann es somit zu einer Akkumulation von Leistungsschwankungen und damit zu Bitfehlern oder gar zu einer Zerstörung der Empfangsdioden kommen.

Über- und Unterschwinger lassen sich nahezu vollständig eliminieren, wenn diejenige Pumpleistung, die nach Änderung des Eingangssignals zum Aufrechterhalten des Gewinns unter stabilen Bedingungen erforderlich ist, bereits zum Zeitpunkt der Laständerung am Eingang bekannt ist. Die eigentliche Schwierigkeit besteht darin, diese Pumpleistung mit möglichst hoher Genauigkeit vorauszuberechnen.

Eine einfachste Lösung hierfür sieht vor, einen linearen Ansatz für die erforderliche Pumpleistung als Funktion der Signaleingangsleistung am optischen Verstärker zu wählen. Dieser Aspekt wird in US 6414788 B1 und US 6341034 B1 beschrieben. Dabei kommen zwei konstante Parameter zum Einsatz. Bei diesem Vorgehen werden jedoch folgende wesentliche Einflussgrößen nicht berücksichtigt:

-   Die benötigte Pumpleistung hängt nicht nur von der Eingangsleistung, sondern auch von dem Gewinn der jeweiligen Verstärkerstufe ab. Da die Stufe eines Verstärkers je nach Einsatz und Kanalbelegung deutlich unterschiedliche Gewinnwerte aufweisen kann, ergeben sich deutliche Abweichungen, die eine Ermittlung der korrekten einzustellenden Pumpleistung beeinträchtigen.

-   Es wird nicht berücksichtigt, dass die benötigte Pumpleistung von der Wellenlänge der bei einer Abschaltung überlebenden Kanäle abhängt. Dies gilt ebenso für so genannte "Gain Ripple".

-   "Fitting Parameter" zur Bestimmung von einzustellenden Pumpleistungswerten werden zu Betriebsbeginn bestimmt, so dass Alterungseffekte mit zunehmender Betriebsdauer zu ansteigenden Abweichungen führen.

-   Nichtlineare Effekte in einer Verstärkungsfaser eines Faserverstärkers, wie z. B. "Excited State Absorption" in einer mit Erbium dotierten Faser eines EDFAs (erbium doped fiber amplifier), bleiben unberücksichtigt und führen damit zu zusätzlichen Abweichungen.

Zur Berücksichtigung der spektralen Abhängigkeit wird in US 6341034 B1 der Einbau eines spektralen Filters vor einem Eingangsmonitor am optischen Verstärker vorgeschlagen. Damit kann die Wellenlängenabhängigkeit des Verfahrens verbessert, wenn auch nicht vollständig eliminiert werden. Aufgrund der hohen Komponentenkosten ist ein Einsatz dieses Verfahrens jedoch unwahrscheinlich.

In US 6 366 393 B1 wird wie in den zuvor genannten Dokumenten eine Kontrolleinheit für den Gewinn eines optischen Verstärkers vorgestellt, die einen linearen Ansatz für die erforderliche Pumpleistung als Funktion der Signaleingangsleistung am optischen Verstärker wählt. Der in diesem Ansatz implizierte Fehler wird mittels einer Korrekturschleife, die sich hinter dem Verstärker befindet und einen Mikroprozessor enthält, berichtigt. Diese Korrektur wird kanalweise berechnet und enthält keine Wellenlängenabhängigkeit, wodurch das Verfahren langsam und unpräzise wird.

In US 2003/0053200 A1 wird die Pumpleistung des optischen Verstärkers mittels einer feed forward Kontrollschleife eingestellt. Dabei wird ein kleiner Teil des WDM-Signals durch einen Filter geleitet, dessen Filter-Transfer-Funktion an die Eigenschaften des Verstärkers angepasst ist. Die Signaleingangsleistung wird durch das Filter selektiv in Abhängigkeit

von der Wellenlänge gewichtet. Der Einfluss der Wellenlängen mit überdurchschnittlichen Auswirkungen auf die Zerfallsrate der angeregten Energieniveaus des Verstärkers wird dabei verstärkt oder abgeschwächt. Das Signal trifft hinter dem Filter auf einen Photodetektor, der mit einer Kontrolleinheit der Pumpleistung des Verstärkers verbunden ist.

In US 2001/0043389 A1 wird der Verstärker-Gewinn mittels einer Vorwärts- und Rückwärts- Schleife kontrolliert. Die Vorwärts-Schleife (feed forward loop) steuert den Verstärker mittels einer schnellen Photodiode, welche die Eingangsleistung misst. Die Rückwärts-Schleife regelt den Verstärkergewinn langsam in Abhängigkeit von der Ausgangsleistung des Verstärkers. Beide Schleifen sind zur Kontrolle der Pumplasereinheit miteinander verbunden. Der Gewinn des Verstärkers wird im Wesentlichen durch die Rückwärts- Schleife eingestellt, während die Vorwärtsschleife die Kompensation von Offsets im Gewinnverlauf des optischen Verstärkers umfasst.

In US 6 407 854 B1 wird eine feed-forward-Steuerung eines optischen Verstärkers in einem WDM-System gezeigt. Die Pumpleistung des Verstärkers wird mittels einer Kontrolleinheit eingestellt, welche die Eingangsleistung des Verstärkers misst und den Strom der Pumplaserdioden linear abhängig vom Messpegel steuert. Dabei kann das elektrische Signale der Pumplaserdioden durch Multiplikation mit einem Faktor oder durch Addition eines Offsets verändert werden, um einen über den gesamten Wellenlängenbereich konstanten Gewinnverlauf des Verstärkers zu gewährleisten. Mit diesem Verfahren werden Einschwingvorgänge von weniger als 200 μs erreicht.

In "Superior high-speed automatic gain controlled erbiumdoped fiber amplifier", Nakaji H., Nakai Y., Shigematsu M und Nishimura M., Optical Fiber Technology 9 (2003), pp. 25-35 wird eine Methode zur Unterdrückung von zeitlichen Gewinnschwankungen in einem überlebenden Kanal eines WDM-Signals bei der Ein- oder Abschaltung weiterer Kanäle des WDM-Signals

beschrieben. Zur Verstärkung des WDM-Signals kommt ein EDFA zum Einsatz, der mit einer Pumpquelle bei 980 nm oder mit einer Pumpquelle bei 1480 nm arbeitet. Bei Verwendung eines Pumplasers im Wellenlängenbereich von 1480 nm und einer optimalen Einstellung der Regelparameter für einen speziellen Anwendungsfall können Überschwinger beim Abschalten von Kanälen nahezu vollständig vermieden werden. Hingegen kommt es bei Verwendung eines Pumplasers im Wellenlängenbereich von 980 nm nach einer Abschaltung von Kanälen zu einem geringen Überschwinger. Wird nun die Pumpleistung nicht wie oben angenommen zum Zeitpunkt des Schaltvorgangs sondern bereits etwas früher auf einen neuen Wert reduziert bzw. angepasst, z.B. mittels eines dem Verstärker vorgeschalteten Verzögerungsgliedes, lässt sich der Überschwinger bei Verwendung der Pumpquelle bei 980 nm fast vollständig eliminieren. Dieses Verfahren basiert darauf, dass die Abnahme der Ausgangsleistung (Wirkung) später als die Abnahme der Eingangsleistung (Ursache) detektiert wird, so dass der Gewinnregelung für einen Zeitraum entsprechend der Verzögerung ein starker Anstieg des Gewinns vorgetäuscht wird, worauf diese mit einer Reduktion der Pumpleistung reagiert. Experimentelle Gewinnmessungen können aus dieser Literaturstelle nachgewiesen werden. Allerdings entsteht immer noch ein Unterschwinger sehr kurzer Zeitdauer.

Dieses Verfahren, das im folgenden als "Feedback-Methode" bezeichnet wird, ist sehr gut geeignet für Laborexperimente, kann jedoch kaum für kommerzielle Systeme eingesetzt werden, da die optimale Zeitverzögerung von der Anzahl der überlebenden Kanäle abhängig ist, keine Vorschrift zur Vorherbestimmung dieser optimalen Verzögerung bekannt ist und die Regelparameter nur für ein spezielles Ereignis optimiert sind. In der Praxis müssen beliebige Ereignisse, d.h. z.B. der Drop (Abzweigen/Wegschalten/Abschalten) einer unterschiedlichen Anzahl von Kanälen, berücksichtigt werden. Dafür sollte die Zeitverzögerung immer neu berechnet und eingestellt werden, was aber in Echtzeit unmöglich bzw. unrealisierbar wäre. Daher erfährt der wellenlängenabhängige Gewinnverlauf unvermeidlich Abweichungen bei einem oder mehreren überlebenden Kanälen, die die breitbandige Verstärkung, zusätzlich zu den bekannten zeitlichen Schwankungen des kanalbezogenen Gewinns, beeinträchtigen. Aus diesen Gründen eignet sich diese Methode für aktuelle optische Schaltnetze nicht.

Ein weiteres Verfahren zur Pumpleistungsvegelung eines optischen Verstärkers ist aus der EP-A-1 079 481 bekannt.

Aufgabe der Erfindung ist es, ein Verfahren anzugeben, das eine optimale Regelung der Pumpleistung eines optischen Verstärkers zur Verstärkung eines optischen Multiplex-Signals mit mehreren Kanälen gewährleistet, damit bei Änderung der Eingangs- oder Ausgangsleistung am optischen Verstärker der wellenlängenabhängige Gewinnverlauf für zu verstärkende Signale aktiver Kanäle aufrechterhalten wird.

Eine Lösung der Aufgabe erfolgt durch ein Verfahren mit den Merkmalen des Patentanspruchs 1.

Ausgehend von einem stabilen Zustand, der z. B. mittels einer Regelung eingestellt wurde, insbesondere der entsprechenden Pumpleistung eines optischen Verstärkers, mit dem ein optisches Wellenlängen-Multiplex-Signal mit mehreren Kanälen verstärkt wird und bei dem eine Änderung der Eingangsleistung oder Ausgangsleistung des Wellenlängen-Multiplex-Signals detektiert wird, wird erfindungsgemäß nach der Änderung der Eingangsleistung ein neuer Wert der gemessenen Pumpleistung derart berechnet und eingestellt, dass sich der Gewinnverlauf des Verstärkers nur minimal ändert.

Die neu einzustellende Pumpleistung kann kurz nach Ab- oder Einschaltung von aktiven Kanälen errechnet und noch rechtzeitig eingestellt werden, da der Gewinn eines EDFAs als Funktion der Wellenlänge in einem kurzen Zeitintervall quasikonstant bleibt.

Vorteilhafte Weiterbildungen der Erfindung sind in den Unteransprüchen angegeben.

Ein wesentlicher Vorteil des erfindungsgemäßen Verfahrens ist darin zu sehen, dass viele wesentliche Einflussgrößen, wie der aktuelle Gewinnwert, die Wellenlängenabhängigkeit aktiver Kanäle, Alterungseffekte und nichtlineare Effekte der Verstärkung, bei der Berechnung der neuen einzustellenden Pumpleistung berücksichtigt werden, so dass eine hoch genaue Ermittlung der optimalen Pumpleistung rasch erfolgt und damit störende Transienten, d. h. Amplitude und Dauer von Überschwingern, effektiv unterdrückt werden.

In vorteilhafter Weise können neue Pumpleistungen z. B. kontinuierlich errechnet und eingestellt werden, sowie auch im Voraus berechnet und eingestellt werden. In solchen Fällen können weiterhin Interpolationswerte aus den vorberechneten Pumpleistungen ermittelt werden.

Durch Messung der Ausgangsleistung, kurz nachdem der Sprung detektiert wurde, kann die Wellenlängenabhängigkeit vollständig berücksichtigt werden. Alterungseffekte werden kompensiert, da eine Vorausberechnung der Pumpleistung relativ zu dem zuvor vorliegenden stabilen Zustand der Verstärkung erfolgt. Ebenso geht der momentane Verstärkergewinn in die Berechnung ein und nichtlineare Effekte in der verstärkenden Faser, wie z. B. bei "Excited State Absorption", werden berücksichtigt. Auch "Gain Ripple" führen zu keiner Veränderung des Gewinns der einzelnen Kanäle. Von besonderer Bedeutung ist, dass dieses Verfahren, neben den bereits im Stand der Technik verwendeten, keine zusätzlichen Messeinrichtungen oder Komponenten benötigt und damit auch aus Kostensicht sehr interessant ist.

In der folgenden Beschreibung wird das erfindungsgemäße Verfahren hauptsächlich für eine Verstärkerstufe illustriert, die eine mit Erbium dotierte Faser enthält. Das Verfahren kann jedoch auch für mehrere kaskadierte Verstärkerstufen mit eventuell unterschiedlichen Verstärkungsfasern und/oder Pumpquellen verwendet werden. Ein Ausführungsbeispiel für den Einsatz mehrerer Pumpquellen in einer Verstärkerstufe wird sogar ausdrücklich beschrieben.

Von Vorteil bei der vorliegenden Erfindung ist ein Modell, das aus einem zuvor vorliegenden stabilen Zustand des optischen Verstärkers die Ermittlung bzw. die Errechung einer neu erforderlichen Pumpleistung ermöglicht. Dazu werden ebenfalls weitere begrenzte Aspekte betrachtet und deren Einflüsse auf das Modell analysiert.

Ein Ausführungsbeispiel der Erfindung wird im Folgenden anhand der Zeichnung näher erläutert.

Dabei zeigen:

Fig. 2:     den zeitlichen Gewinnverlauf bei Abschaltung von aktiven Kanälen mit Feedforward-Regelung,
Fig. 3:     das Gewinnspektrum eines EDFAs bei 80 aktiven Kanälen,
Fig. 4:     den zeitlichen Gewinnverlauf eines überlebenden Kanals (Ausschnitt aus Fig. 2),
Fig. 5:     zeitliche Gewinnabweichungen für die Kanäle innerhalb von 10 ms nach der Abschaltzeit,
Fig. 6:     zeitliche Gewinnabweichungen für die Kanäle innerhalb von 25 $\mu$s nach der Abschaltzeit,
Fig. 7:     die soll- und modellbezogene einzustellende Pumpleistung als Funktion der Eingangleistung,
Fig. 8:     Abweichungen zwischen soll- und modellbezogenen einzustellenden Pumpleistungswerten,
Fig. 9:     ein dynamisches Regelkonzept,
Fig. 10:    zeitliche Gewinnverläufe des überlebenden Kanals bei unterschiedlichen Abschaltdauern der anderen Kanäle

(a) Abschaltdauer: 1 $\mu$s
(b) Abschaltdauer: 10 $\mu$s
(c) Abschaltdauer: 100 $\mu$s
(d) Abschaltdauer: 1 ms
(e) Abschaltdauer: 10 ns bis 1 ms

Fig. 11:    die Amplitude des Überschwingers bei unterschiedlichen Abschaltdauern von Kanälen,
Fig. 12:    die geregelte Leistungsverteilung eines dreistufigen Faserverstärkers.

In Fig. 2 ist ein zeitlicher Gewinnverlauf G bei Abschaltung von aktiven Kanälen mit Feedforward-Regelung in einem einstufigen Erbium dotierten Faserverstärker dargestellt, wobei die bei der reduzierten Eingangsleistung zur Aufrechterhaltung des Gewinns erforderliche Pumpleistung zum Zeitpunkt der Laständerung eingestellt wird. Ein Unterschwinger ist dabei komplett unterdrückt.

Im Folgenden wird beschrieben, wie, ausgehend von einem bekannten Betriebszustand des Faserverstärkers, die nach dem Schaltvorgang zur Aufrechterhaltung des Gewinns erforderliche Pumpleistung $P_{pump}^{nach}$ berechnet werden kann.

Das Verfahren wird anhand einer geeigneten Modellierung des Verstärkungsprozesses in der mit Erbium dotierten Faser erläutert. Im Folgenden beziehen sich sämtliche Leistungsangaben auf den Anfang oder das Ende der dotierten Faser. Vorhandene Messeinrichtungen (einschließlich Photodioden) sind aber in der Regel derart kalibriert, dass sie die am Eingang oder Ausgang des Verstärkers bzw. der Verstärkerkarte vorliegenden Leistungen erfassen.

Meist befinden sich zwischen den Ein- und Ausgängen der Verstärkerkarte sowie den entsprechenden Enden der Verstärkungsfaser noch passive Komponenten, wie z.B. Koppler und Isolatoren. In diesem Fall ist noch eine Korrektur der Leistungsangaben um die Dämpfungsverluste der vor- und nachgeschalteten Komponenten erforderlich. Ebenso müssen Verluste zwischen der Messeinrichtung für das Pumplicht und der Einkoppelstelle in der Erbium-dotierten Faser berücksichtigt werden. Aus der Korrektur resultieren die tatsächlich in die dotierte Faser ein- bzw. ausgekoppelten Leistungen.

Ferner ist noch ein weiterer Korrekturschritt erforderlich, um die tatsächlich wirksame Pumpleistung zu ermitteln, da aufgrund von Verlustmechanismen in der Faser nicht sämtliche in die dotierte Faser eingekoppelten Photonen an dem Verstärkungsprozess teilnehmen. Dies ist insbesondere bei Verwendung von Pumpquellen mit einer Emissionswellenlänge im Bereich von 980nm erforderlich, da in diesem Fall auch bereits angeregte Ionen, die sich in einem höheren Energieniveau befinden, Pumpleistung absorbieren können, wodurch dem eigentlichen Verstärkungsprozess Pumpphotonen verloren gehen. Dieser Prozess wird als "Pump excited state absorption (ESA)" bezeichnet. Zur Unterscheidung wird im Folgenden der Begriff der effektiven Pumpleistung $P_{eff}$ eingeführt, der die dem Verstärkungsprozess effektiv zur Verfügung stehende Pumpleistung kennzeichnet.

Alle im Anschluss angegebenen Leistungsgrößen sind im linearen Maßstab (mW) zu verwenden.

Ausgehend von der in die Faser eingekoppelten Pumpleistung $P_{pump}$ kann die effektive Pumpleistung $P_{eff}$ mit Hilfe der Gleichung

$$P_{eff} = P_0 \cdot \ln\left\{1 + \frac{P_{pump}}{P_0}\right\}$$

berechnet werden, wobei das Symbol $P_o$ für einen Korrekturparameter steht. Dieser muss während des Betriebs des Verstärkers in einem Übertragungssystem bekannt sein und wird am besten bereits beim Abgleich der Verstärkerkarte bestimmt.

Der charakteristische Parameter $P_0$ wird deshalb zusammen mit einem zweiten charakteristischen Parameter $G_{norm}$ vor dem Berechnungsverfahren im Rahmen des Kalibrationsprozesses des Faserverstärkers durch Messung ermittelt. Bei dieser Messung wird die zur Aufrechterhaltung eines vorgegebenen Gewinnwertes erforderliche Pumpleistung gegen die Eingangs- bzw. Ausgangsleistung des Faserverstärkers aufgetragen. Dabei ist es von Vorteil, die Kanalbelegung nicht zu verändern und unterschiedliche Eingangsleistungen durch gleiche Abschwächung aller Kanäle zu realisieren.

Das Messverfahren macht sich die Tatsache zu nutze, dass die zur Aufrechterhaltung eines vorgegebenen Gewinnwertes erforderliche Pumpleistung einer mit Erbium dotierten Faser ohne Verlustmechanismen eine lineare Funktion der Eingangsleistung ist. Für die größeren Pumpleistungswerte tritt eine Abweichung von einer Geraden ein. Diese Abweichung ist durch die Pump-ESA bedingt. Der Parameter $P_0$ wird nun durch Fitting bestimmt. Dazu werden für unterschiedliche Werte von $P_0$ die sich aus den gemessenen Pumpleistungen ergebenden effektiven Pumpleistungen berechnet und die Kurve durch eine Gerade entsprechend des Kriteriums eines minimalen Fehlerquadrats approximiert. Die Summe der Fehlerquadrate wird als Funktion von $P_0$ dargestellt. Als Wert für $P_0$ wird nun derjenige Wert gewählt, der zu einer minimalen Summe der Fehlerquadrate führt. Mit diesem Wert ergibt sich eine Kurve, welche die effektive Pumpleistung $P_{eff}$ als lineare Funktion der Eingangsleistung des Verstärkers beschreibt. Aus der Steigung der derart ermittelten Geraden lässt sich nun der für den Faserverstärker zweite charakteristische Parameter $G_{norm}$ ableiten. Die Änderung der effektiven Pumpleistung $P_{eff}$ ist mit entsprechenden Änderungen der Eingangsleistung über die Proportionalitätskonstante

$$\alpha = \frac{\overline{\lambda}_{signal}}{\lambda_{pump}} \cdot \frac{G_{sig} - 1}{G_{norm}} \cdot$$

verknüpft, wobei die beiden Wellenlängen $\overline{\lambda}_{signal}$ und $\lambda_{pump}$ die mittlere Signalwellenlänge bzw. die Pumpwellenlänge bezeichnen. Der Parameter

$$G_{sig} = \frac{P_{sig,out}}{P_{sig,in}}$$

steht allgemein für das Verhältnis einer Eingangs- und Ausgangssignalleistung. Da bis auf $G_{norm}$ alle anderen Größen bekannt sind, kann jetzt auch der zweite charakteristische Parameter eindeutig bestimmt werden. Der Wert von $G_{norm}^{-1}$ liegt typischerweise im Bereich zwischen 0,95 und 1,00.

Nach der Ermittlung der beiden Kalibrationsparameter $P_0$ und $G_{norm}$ wird nun die nach einem Schaltvorgang zur Aufrechterhaltung des Gewinns erforderliche Pumpleistung $P_{pump}^{nach}$ berechnet. Ausgehend von der gemessenen Pumpleistung $P_{pump}^{vor}$ vor dem Schaltvorgang lässt sich die effektive Pumpleistung $P_{eff}^{vor}$ mit der folgenden Formel

$$P_{eff}^{vor} = P_0 \cdot \ln\left\{1 + \frac{P_{pump}^{vor}}{P_0}\right\} \qquad (1)$$

berechnen. Mit der Summensignalleistung $P_{sig}^{vor}$ vor dem Schaltvorgang ergibt sich der Wert der effektiven Pumpleistung für die Signalleistung $P_{sig}^{nach}$ nach dem Schaltvorgang zu

$$P_{eff}^{nach} = P_{eff}^{vor} + \frac{\overline{\lambda}_{signal}}{\lambda_{pump}} \cdot \frac{1}{G_{norm}} \cdot \left\{P_{sig,out}^{nach} - P_{sig,in}^{nach} - P_{sig,out}^{vor} + P_{sig,in}^{vor}\right\} \qquad (2)$$

wobei die dabei auftretenden Formelzeichen die folgende Bedeutung haben:

$P_{sig,out}^{nach}$     die sich nach dem Schaltvorgang bei gleichbleibendem Gewinn (d. h. stabilem Zustand) ergebende Summenausgangsleistung,

$P_{sig,in}^{nach}$     die Summeneingangsleistung nach dem Schaltvorgang,

$P_{sig,out}^{vor}$     die Summenausgangsleistung vor dem Schaltvorgang,

$P_{sig,in}^{vor}$     die Summeneingangsleistung vor dem Schaltvorgang,

Die beiden Wellenlängen $\overline{\lambda}_{signal}$ und $\lambda_{pump}$ stehen für die mittlere Signalwellenlänge nach dem Schaltvorgang bzw. die Pumpwellenlänge. Aus der nach dem Schaltvorgang einzustellenden effektiven Pumpleistung kann nun die tatsächlich von der Steuerung am Fasereingang einzustellende Pumpleistung durch Inversion von Gleichung (1) bestimmt werden, was zu dem Ergebnis

$$P_{pump}^{nach} = P_0 \cdot \left[\exp\left\{\frac{P_{eff}^{nach}}{P_0}\right\} - 1\right] \qquad (3)$$

führt. In der Regel wird die genaue Kanalbelegung nach dem Schaltvorgang erst mit deutlicher Verzögerung bekannt sein und steht damit für die Regelung nicht zur Verfügung. In diesem Fall kann für die mittlere Signalwellenlänge die mittlere Wellenlänge der Signale bei voller Belegung des Verstärkungsbandes angesetzt werden.

Unter bestimmten Voraussetzungen kann Gleichung (2) vereinfacht werden, so dass Vereinfachungen des Verstärkeraufbaus möglich werden. Zwei mögliche Vereinfachungen werden im Folgenden aufgezeigt:

Zur Berechnung der Pumpleistung $P_{pump}^{nach}$ nach dem Schaltvorgang müssen nach Glg. (2) die Summenleistungen eingangs- und ausgangsseitig sowohl vor als auch nach dem Schaltvorgang bekannt sein. Aufgrund der geforderten Regelzeiten von einigen μs müssen sowohl die Messeinrichtungen am Eingang der Verstärkerstufe als auch diejenige am Ausgang kurze Messzeiten aufweisen. Diese Forderung nach kurzen Messzeiten kann allerdings auf den Zeitpunkt nach dem Schaltvorgang eingeschränkt werden, da angenommen wird, dass der Schaltvorgang ausgehend von einem stabilen Zustand erfolgt. Einzelne Verstärkerstufen weisen typischerweise einen Gewinn von 20 dB oder mehr auf, was bedeutet, dass die Ausgangsleistungen um ca. zwei Größenordnungen größer sind als die Eingangsleistungen. Besonders kritisch im Hinblick auf das dynamische Verhalten sind ferner Schaltvorgänge, bei denen die Summeneingangs- und damit auch die Summenausgangsleistung stark abnehmen (z.B. um mehr als 10 dB). Dies bedeutet jedoch, dass der zweite Term in der geschweiften Klammer von Glg. (2) $P_{sig,in}^{nach}$ deutlich kleiner als die anderen Terme ist und folglich vernachlässigt werden kann. Damit kann die Gleichung zu

$$P_{eff}^{nach} \approx P_{eff}^{vor} + \frac{\overline{\lambda}_{signal}}{\lambda_{pump}} \cdot \frac{1}{G_{norm}} \cdot \left\{ P_{sig,out}^{nach} - P_{sig,out}^{vor} + P_{sig,in}^{vor} \right\} \qquad (4)$$

vereinfacht werden. In dieser Gleichung ist $P_{sig,out}^{nach}$ die einzige Größe, zu deren Messung nur kurze Zeitdauern zur Verfügung stehen. Daher ist die Verwendung möglichst schneller Photodioden nur noch zur Messungen der Summenausgangsleistungen angebracht, während zur Messung der Summeneingangsleistung langsamere Messeinrichtungen verwendet werden können. Dies ist von Interesse, da durch den Verzicht auf eine Vorspannung die Empfindlichkeit von Photodioden aufgrund des geringeren Dunkelstroms erhöht werden kann.

Zum anderen ergibt sich eine Vereinfachung von Glg. (2) für den Fall, dass sich der mittlere Verstärkergewinn nicht ändert, was ein wesentliches Problem für die Berechnung der sich nach dem Schaltvorgang bei gleich bleibendem Gewinnverlauf ergebenden Ausgangsleistung darstellt. In diesem Fall kann Gleichung (2) in

$$P_{eff}^{nach} = P_{eff}^{vor} + \frac{\overline{\lambda}_{signal}}{\lambda_{pump}} \cdot \frac{G_{sig} - 1}{G_{norm}} \cdot \left\{ P_{sig,in}^{nach} - P_{sig,in}^{vor} \right\} \qquad (5)$$

mit

$$G_{sig} = \frac{P_{sig,out}^{vor}}{P_{sig,in}^{vor}}$$

umgeformt werden. Wiederum ist nur eine schnelle Messeinrichtung erforderlich, in diesem Fall zur Messung der Summeneingangsleistung. Die Gleichung kann aber so umgeschrieben werden, dass kurze Messzeiten nur für die Messeinrichtungen am Ausgang der mit Erbium dotierten Faser nötig sind.

Es sei hier jedoch angemerkt, dass der Gewinn einer Verstärkerstufe eines EDFAs in der Regel, insbesondere wenn sie kein Glättungsfilter enthält, für die einzelnen Kanäle unterschiedlich ist.

Bei Verwendung mehrerer Pumpquellen im optischen Verstärker ist das prinzipielle Vorgehen identisch zu dem Vorgehen bei nur einer Pumpquelle. Zunächst werden die im Referenzzustand vorliegenden Pumpleistungen separat entsprechend der Gleichung (1) in effektive Pumpleistungen umgerechnet, wobei unter Umständen für die einzelnen Pumpquellen unterschiedliche Parameter $P_0$ verwendet werden müssen. Die effektiven Pumpleistungen $P_{eff,i}^{vor}$ werden dann anschließend mit dem Quotienten aus der mittleren Signalwellenlänge $\overline{\lambda}_{signal}$ und der jeweiligen Pumpwellenlänge $\lambda_{pump}^{i}$ gewichtet. Die Summe dieser Größen ergibt eine Hilfsgröße $X_{eff}^{vor}$:

$$X_{eff}^{vor} = \sum_{i=1}^{N} \frac{\lambda_{pump}^{i}}{\overline{\lambda}_{signal}} \cdot P_{eff,i}^{vor} \qquad ,$$

wobei N die Anzahl der Pumpquellen bezeichnet. Die nach dem Schaltvorgang einzustellende Hilfsgröße $X_{eff}^{nach}$ ergibt sich entsprechend zu:

$$X_{eff}^{nach} = X_{eff}^{vor} + \frac{1}{G_{norm}} \cdot \left\{ P_{sig,out}^{nach} - P_{sig,in}^{nach} - P_{sig,out}^{vor} + P_{sig,in}^{vor} \right\}.$$

Für die Aufrechterhaltung des Gewinns ist es ohne Belang, wie stark die einzelnen Pumpquellen zu diesem Sollwert beitragen. Dennoch kann es Präferenzen geben, die z. B. aus der Forderung nach einer möglichst optimalen Rauschzahl resultieren und von der gewählten Pumpkonfiguration abhängen. Sind die Beiträge der einzelnen Pumpquellen festgelegt, werden diese mit dem Quotienten aus der mittleren Signalwellenlänge $\overline{\lambda}_{signal}$ und der entsprechenden Pumpwellenlänge $\lambda_{pump}^{i}$ multipliziert. Damit liegen nun wieder die jeweiligen effektiven Pumpleistungen vor, die nach Gleichung (3) in die tatsächlichen Pumpleistungen $P_{pump}^{nach}(i)$ umgerechnet werden.

Das zuvor beschriebene Vorgehen beruht auf der quasi immer erfüllten Annahme, dass die an einer Stelle der Verstärkerfaser eingekoppelten Pumpleistungen jeweils Wellenlängen aus unterschiedlichen Absorptionsbändern aufweisen.

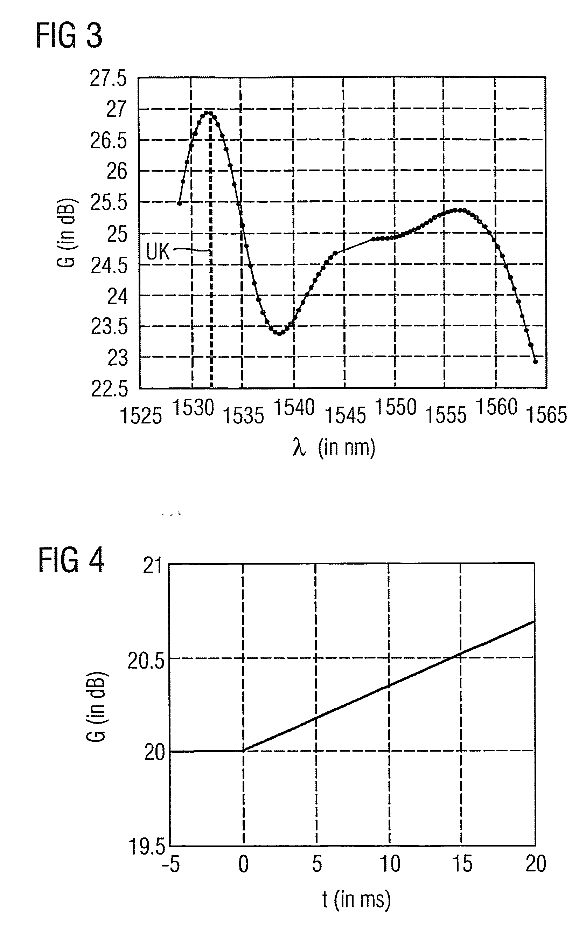

Figur 3 zeigt ein Beispiel für den Verlauf des Gewinns G als Funktion der Wellenlänge für 80 Kanäle eines WDM-Signals.

Exemplarisch wird nun der Fall betrachtet, dass alle Kanäle bis auf den markierten überlebenden Kanal UK abgeschaltet werden. Das eigentliche Ziel der Regelung ist es nicht, den mittleren Gewinn, wie er aus einer Gesamtleistungsmessung am Eingang und am Ausgang der Stufe resultiert, konstant zu halten. Vielmehr muss dafür gesorgt werden, dass sich der Gewinnverlauf über der Wellenlänge nicht ändert, denn nur dann bleibt die Leistung, die auf die jeweiligen Empfänger fällt, über der Zeit unverändert. In dem obigen Beispiel bedingt dies eine Änderung des mittleren Gewinns.

Hilfreich bei der Bestimmung eines neuen Sollgewinns sind die dynamischen Eigenschaften einer Erbiumdotierten Faser. Selbst bei einer sprunghaften Änderung der Eingangsleistung ändert sich die mittlere Besetzungsinversion und damit das Gewinnprofil nur langsam. Fig.4 zeigt einen zeitlichen Gewinnausschnitt der bereits in der Fig. 1 gezeigten durchgezogene Kurve für eine konstant bleibende Pumpleistung bei einem Sprung der Eingangsleistung von 19 dB und z. B. für den überlebenden Kanal UK, der sich für große Zeitspannen asymptotisch einem Grenzwert von 30 dB nähert. Innerhalb der ersten 10 $\mu$s nach dem Schaltvorgang ändert sich der Gewinn des betrachteten Kanals jedoch nur geringfügig. Daher kann diese Zeitspanne benutzt werden, um die gewünschte Ausgangsleistung nach dem Schaltvorgang und den entsprechenden mittleren Gewinn bei veränderter spektraler Leistungsverteilung zu bestimmen.

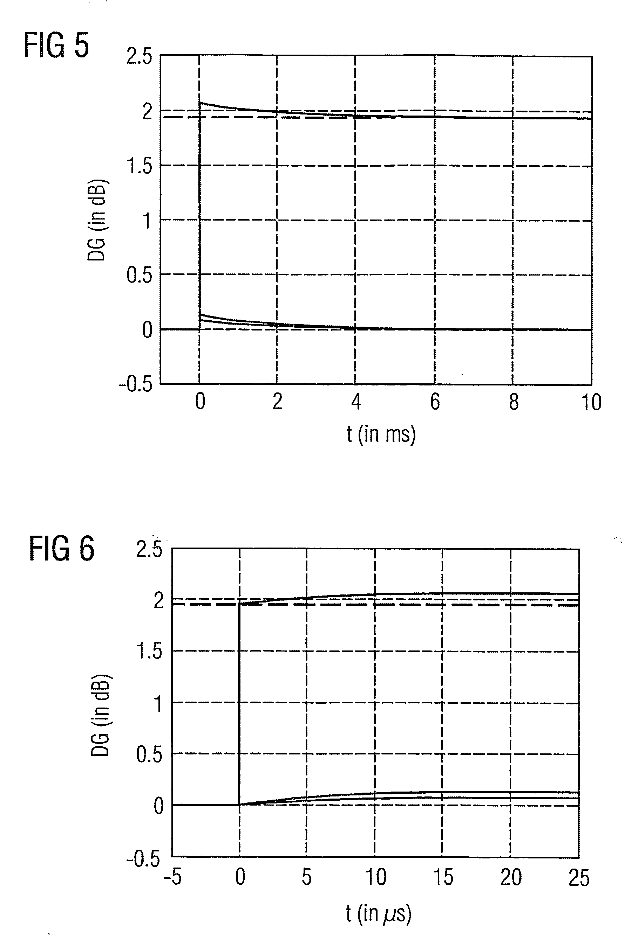

Für das oben vorgestellte Ausführungsbeispiel, bei dem von 80 Kanälen bis auf einen Kanal bei 1531.9 nm alle weiteren Kanäle abgeschaltet werden, ist das dynamische Verhalten des Faserverstärkers EDFAs in den weiteren Figuren 5 und 6 dargestellt. Gezeigt werden zeitliche kanalindividuelle Gewinnänderungen DG(t) bei verschiedenen Wellenlängen (im Bereich von 0 dB dargestellte Kurven) sowie die Änderung des mittleren Gewinns (dargestellte Kurve mit einem Sprung bei ca. 2 dB) in Bezug auf den Zustand vor dem Schaltvorgang an t=0 ms. Die gestrichelt dargestellte horizontale Linie bei ca. 2 dB gibt die Gewinnänderung nach Erreichen des eingeschwungenen Zustands an. Fig.6 ist eine Zeitlupe der Fig.5 im Bereich von einigen Millisekunden vor und nach dem Schaltvorgang von Kanälen.

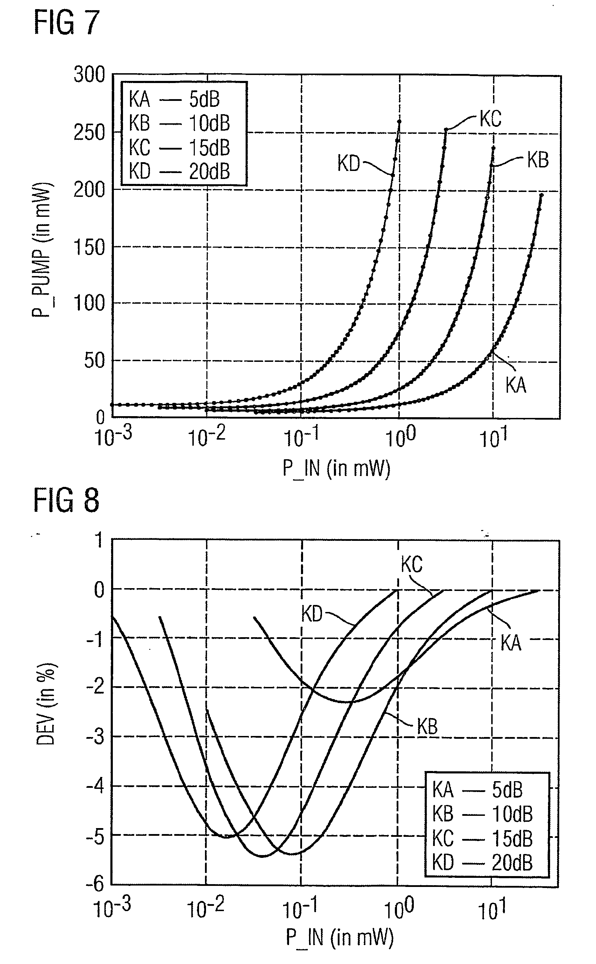

Nun zeigt die folgende Fig.7 eine durch durchgezogene Kurven KA, KB, KC, KD dargestellte erforderliche, d. h. Soll-Pumpleistung P_PUMP als Funktion der Eingangsleistung P_IN des Faserverstärkers, die zur Aufrechterhaltung verschiedener mittlerer Gewinnwerte 5, 10, 15, 20 dB nach einem Schaltvorgang gemäß Fig. 4 bis 6 eingestellt sein sollte. Zur Verifikation des oben beschriebenen Verfahrens wurde, jeweils ausgehend von dem Datenpunkt mit maximaler Eingangsleistung, die Pumpleistung nach obigem Verfahren gemäß den Gleichungen (1) bis (6) bestimmt und das jeweilige Ergebnis durch Punkte in der Fig.7 dargestellt. Dabei fällt die sehr gute Übereinstimmung der per Simulation ermittelten Pumpleistungen mit den vorausberechneten Werten auf.

Zur Verdeutlichung zeigt Fig.8 gemäß den Kurven KA, KB, KC, KD und den eingetragenen Punkten aus Fig. 7 den relativen Fehler DEV zwischen der erforderlichen Soll-Pumpleistung und der erfindungsgemäßen Vorausberechnung der Pumpleistung. Dabei beträgt der relative Fehler maximal ca. 5%.

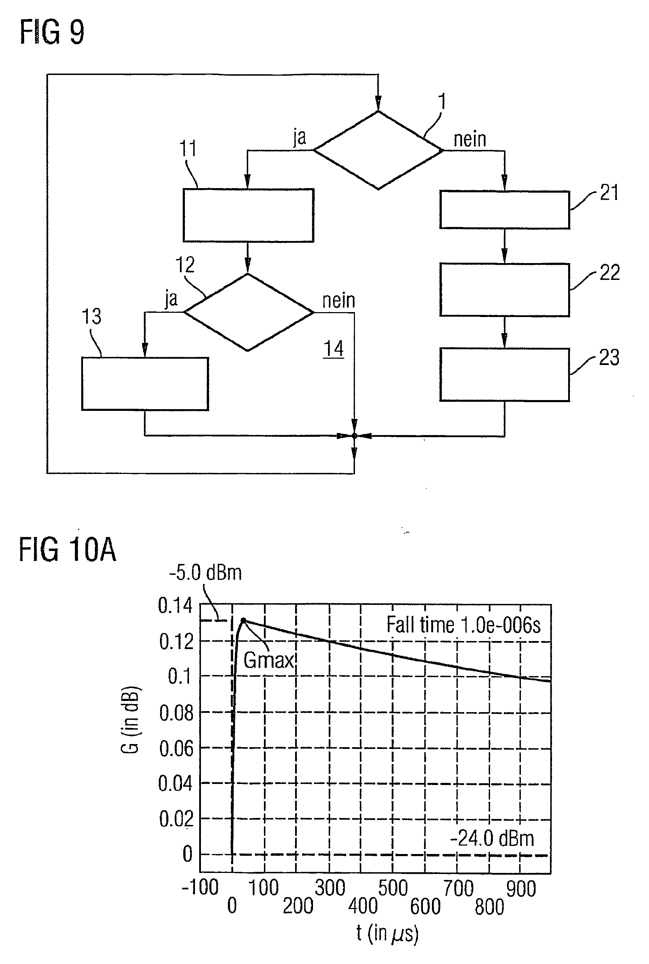

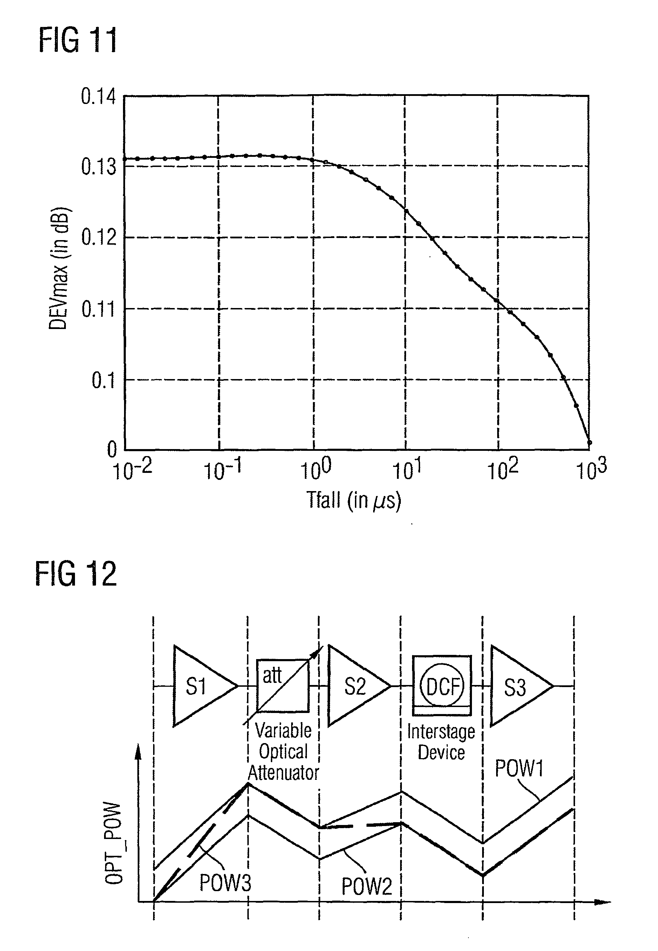

Bisher wurde davon ausgegangen, dass die Eingangsleistung beim Abschalten von Kanälen sofort von einem Startwert auf einen Endwert abfällt. In dem folgenden Abschnitt wird nun das Vorgehen mit auftretenden Effekten auf dem restlichen Überschwinger des Gewinns für den Fall beschrieben, dass die Eingangsleistung während einer Abschaltzeit Fall time (siehe voraussichtlich Figuren 10a bis10e mit Figur 11) linear von ihrem Startwert auf den Endwert abfällt. Unter diesen Annahmen stellt die Fig.9 ein dynamisches Regelkonzept zur Durchführung des Verfahrens dar.

Zunächst wird überprüft, ob die Eingangsleistung schon seit einer vorgegebenen Zeitspanne konstant war (Schritt 1). Ist dies der Fall, wird der Verstärker mit dem herkömmlichen Regelkonzept mit Rückkopplung betrieben (Schritt 11) (siehe dazu z. B. Mann, Schiffelgen, Froriep, "Einführung in die Regelungstechnik", Hanser-Verlag, München, 7. Auflage, 1997). Wird dabei ein stabiler Zustand erreicht (Schritt 12), wird dieser als neuer Referenzzustand definiert (Schritt 13). Ist hingegeben die Eingangsleistung nicht konstant, d. h. wird eine Änderung der Eingangleistung während der vorgegebenen Zeitspanne detektiert (Schritt 1), wird auf den erfindungsgemäßen Feedforward-Betrieb umgeschaltet (Schritt 21). Die einzustellenden Pumpleistungen werden dabei nach jedem Zeitintervall basierend auf dem letzten-Referenzzustand und den aktuellen Werten für die Eingangsleistung sowie die Ausgangsleistung berechnet (Schritt 22) und eingestellt (Schritt 23). Anschließend wird nochmals wiederum geprüft, ob die Eingangsleistung schon seit einer vorgegebenen Zeitspanne konstant war (Schritt 1).

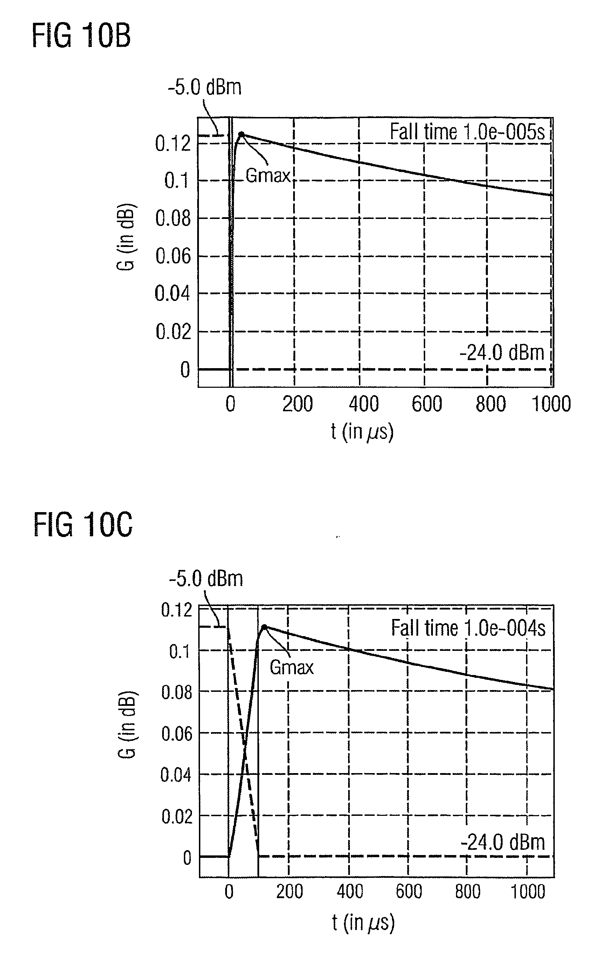

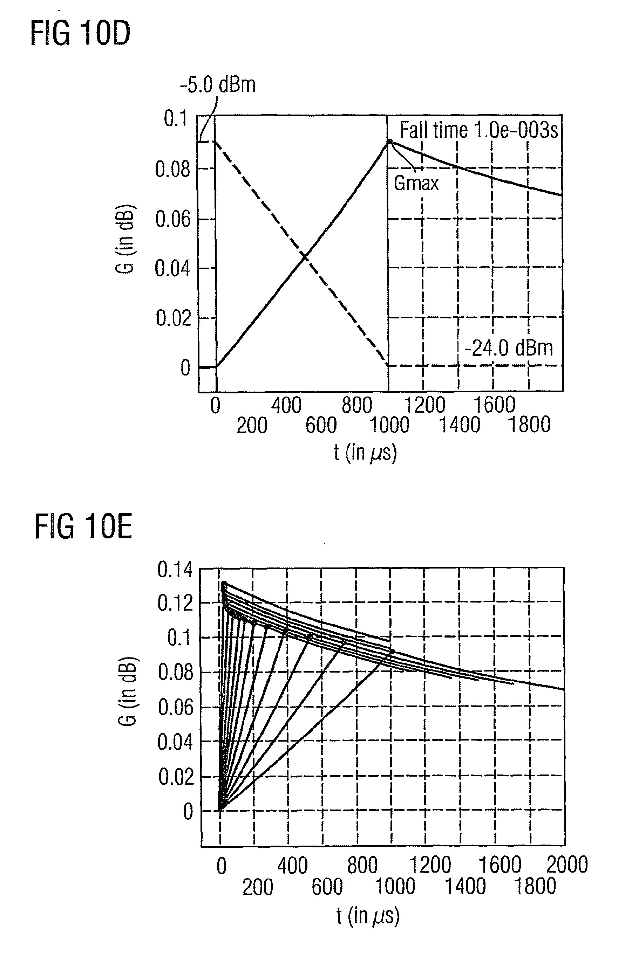

Wie schon zuvor wird nun der Fall untersucht, dass ausgehend von 80 Kanälen alle Kanäle bis auf einen bei 1531.9 nm abgeschaltet werden. Zeitliche Gewinnänderungen des überlebenden Kanals bei unterschiedlichen Abschaltzeiten bzw. -dauern von 1 $\mu s$, 10 $\mu s$, 100 $\mu s$ und 1 ms sind in den Figuren 10a, 10b, 10c und 10d mittels einer durchgezogenen Kurve dargestellt sowie für Abschaltzeiten zwischen 10 ns und 1 ms in der Figur 10e einander überlagert, wobei der Zeitpunkt und der Wert der maximalen Gewinnänderung Gmax mit einem Punkt dargestellt wird. Zum besseren Verständnis zeigt die gestrichelt darstellte Kurve den zeitlichen Verlauf der abfallenden Eingangsleistung im linearen Maßstab. Wie die vorhergehenden Untersuchungen gezeigt haben, ergibt sich bei einer sprunghaften Änderung der Eingangsleistung und einer exakten Vorausberechnung der im stabilen Zustand benötigten Pumpleistung ein geringfügiger Überschwinger. Prinzipiell bestünde die Möglichkeit, dass sich diese Fehler bei einer wiederholten Anwendung der vorausschauenden Einstellung der Pumpleistung unter Verwendung der aktuell gemessenen Ausgangsleistung akkumulieren und es zu einer Divergenz des Verfahrens kommt. Dies ist jedoch nicht der Fall.

In Fig. 10e sind die sich für verschiedene Abschaltzeiten im Bereich von 10ns bis 1ms ergebenden Gewinnänderungen des "überlebenden" Kanals einander überlagert dargestellt, wobei wiederum die Punkte die jeweilige maximale Gewinnänderung Gmax markieren. Bemerkenswerterweise hängt der Einschwingvorgang für große Zeitspannen nur geringfügig von der Abschaltzeit ab.

Ergänzend zu der Fig. 10e zeigt Fig. 11 den auftretenden Überschwinger DEVmax als Funktion der Abschaltzeit Tfall an. Bei Abschaltzeiten unterhalb 1$\mu s$ ergibt sich ein konstanter Wert, während bei größeren Abschaltzeiten die Stärke des Über schwingers mit größer werdender Abschaltzeit immer mehr abnimmt.

Ferner zeigt Fig. 12 die geregelte Leistungsverteilung OPT_POW eines drei-stufigen Faserverstärkers, bestehend aus den Verstärkerstufen S1 S2 und S3, dessen Gewinn mit Hilfe eines den ersten Verstärkerstufen S1, S2 zwischengeschalteten variablen Dämpfungsgliedes att variiert werden kann. Zwischen die beiden letzten Stufen S2, S3 kann ein weiteres optisches Modul DCF eingefügt werden, das z. B. das Hinzuschalten und Auskoppeln von wellenlängenbezogenen Kanälen oder aber eine Kompensation der Streckendämpfung ermöglicht.

Dabei wird die Leistungsverteilung OPT_POW entlang des gesamten Faserverstärkers für verschiedene Betriebszustände dargestellt. Die Leistungskurve POW1 zeigt die vor dem Schaltvorgang herrschende Leistungsverteilung im Faserverstärker, die einen stabilen Zustand erreicht hat und für die eine vorliegende Kanalbelegung eine optimale Rauschzahl bietet. Um Über- und Unterschwinger zu vermeiden bzw. so gering wie möglich zu halten, werden die einzelnen Verstärkerstufen direkt nach dem Schaltvorgang mit Hilfe der Feedforward-Regelung auf konstantem Gewinn gehalten, so dass sich direkt nach dem Schaltvorgang ein zweiter dargestellter Leistungsverlauf POW2 ergibt.

Da dieser jedoch im Hinblick auf die Rauschzahl nicht optimal ist, sorgt eine langsame Regelung, nachdem das Eingangssignal stabil ist, dafür, dass der Leistungsverlauf langsam von dem zweiten Leistungsverlauf POW2 zu einem weiteren hier als gestrichelte Kurve POW3 dargestellten Leistungsverlauf übergeht. Dieser Vorgang geht langsam vonstatten, so dass diese Funktion mittels einer herkömmlichen Regelung durchgeführt werden kann.

Da sich der Gewinn der einzelnen Verstärkerstufen S1, S2, S3 in einem ersten Zeitintervall nicht verändern soll, können die sich nach dem Schaltvorgang am Eingang jeder Stufe einstellenden Summensignalleistungen unabhängig voneinander berechnet werden. Die dazu erforderlichen Pumpleistungen können direkt anhand der bereits dargelegten Formeln bestimmt werden.

Unter Umständen reicht die verfügbare Rechenleistung nicht aus, um nach dem Schaltvorgang in Echtzeit die neuen erforderlichen Pumpleistungen zu berechnen. In diesem Fall bietet es sich an, direkt nach Erreichen eines stabilen Zustandes prophylaktisch eine Tabelle anzulegen, die die zur Aufrechterhaltung des Gewinns erforderliche Pumpleistung für eine ausreichende Anzahl an Signaleingangsleistungen enthält, die bei Schaltvorgängen als Referenzwerte für eine Interpolation dienen.

**Patentansprüche**

1. Verfahren zur Anpassung einer Pumpleistung eines optischen Verstärkers, mit dem ein optisches Wellenlängen-Multiplex-Signal mit mehreren Kanälen unterschiedlicher Wellenlänge verstärkt wird und bei dem eine Änderung von Eingangsleistung oder Ausgangsleistung detektiert wird,
**dadurch gekennzeichnet,**
**dass** nach der Änderung der Eingangsleistung innerhalb eines Zeitintervalls, das kleiner als die Reaktionszeit des Verstärkers ist, die Summeneingangsleistung und/oder die Summenausgangsleistung gemessen wird und hieraus - ausgehend von einem zuvor herrschenden vorzugsweise stabilen Zustand des Gewinns - ein neuer Wert der Pumpleistung derart berechnet wird, dass der Einfluss der Wellenlängen der Kanäle auf die zur Aufrechterhaltung des Gewinnsverlaufs erforderliche Pumpleistung berücksichtigt wird,
und **dass** diese berechnete Pumpleistung eingestellt wird, so dass der Gewinnverlauf des Verstärkers möglichst konstant bleibt.

2. Verfahren nach Anspruch 1,
**dadurch gekennzeichnet,**

   **dass** das Modell zur Errechnung der neuen Pumpleistung $P_{pump}^{nach}$ nach einem die Eingangsleistung ändernden Schaltvorgang durch folgende Formeln definiert wird:

$$P_{pump}^{nach} \; = \; P_0 \; \cdot \; \left[ \exp\left\{ \frac{P_{eff}^{nach}}{P_0} \right\} \; - \; 1 \right]$$

   mit

$$P_{eff}^{nach} \; = \; P_{eff}^{vor} \; + \; \frac{\overline{\mu}_{signal}}{\mu_{pump}} \; \cdot \; \frac{1}{G_{norm}} \; \cdot \; \left\{ P_{sig,out}^{nach} \; - \; P_{sig,in}^{nach} \; - \; P_{sig,out}^{vor} \; + \; P_{sig,in}^{vor} \right\}$$

   und

$$P_{eff}^{vor} \; = \; P_0 \; \cdot \; \ln\left\{ 1 \; + \; \frac{P_{pump}^{vor}}{P_0} \right\}$$

   wobei es sich bei den Größen $( P_{sig,out/in}^{nach} )$ um Messgrößen handelt, die innerhalb einer Zeitspanne von einigen 10 µs nach dem Schaltvorgang aufgenommen werden, in der sich der Gewinn des Verstärkers nur geringfügig ändert, und

   $( P_{sig,\,out}^{nach} )$ die Summenausgangsleistung nach dem Schaltvorgang,

   $( P_{sig,in}^{nach} )$ die Summeneingangsleistung nach dem Schaltvorgang,

   $( P_{sig,out}^{vor} )$ die Summenausgangsleistung vor dem Schaltvorgang, $( P_{sig,in}^{vor} )$ die Summeneingangsleistung vor dem Schaltvorgang,
   $(\overline{\mu}_{signal})$ und $(\mu_{pump})$ die mittlere Signalwellenlänge nach dem Schaltvorgang bzw. die Pumpwellenlänge, $(G_{norm},$ $P_0)$ zwei Kalibrationsparameter des optischen Verstärkers, $( P_{pump}^{vor} )$ die gemessene Pumpleistung vor dem Schaltvorgang und $P_{eff}^{vor/nach}$ effektive Leistungen, welche keine Verlustmechanismen berücksichtigen, bezeichnen.

**3.** Verfahren nach Anspruch 2,
**dadurch gekennzeichnet,**
**dass** unter Voraussetzung eines mittleren Gewinns eines EDFA-Verstärkers ohne Glättungsfilter, die Berechnung der neuen effektiven Pumpleistung $P_{eff}^{nach}$ nach der Formel

$$P_{eff}^{nach} = P_{eff}^{vor} + \frac{\overline{\mu}_{signal}}{\mu_{pump}} \cdot \frac{G_{sig} - 1}{G_{norm}} \cdot \left\{ P_{sig,in}^{nach} - P_{sig,in}^{vor} \right\}$$

erfolgt,

wobei das Verhältnis $\left( G_{sig} = \dfrac{P_{sig,out}^{vor}}{P_{sig,in}^{vor}} \right)$ den mittleren Gewinn über den gesamten Wellenlängenbereich kennzeichnet und vor und nach dem Schaltvorgang als annähernd konstant angenommen wird.

**4.** Verfahren nach einem der vorhergehenden Ansprüche,
**dadurch gekennzeichnet,**
**dass** bei langsamer Änderung der Eingangsleistung die Berechnung und die Einstellung der Pumpleistung sukzessive durchgeführt werden.

**5.** Verfahren nach einem der vorhergehenden Ansprüche,
**dadurch gekennzeichnet,**
**dass** während stabiler Zustände neue Werte der Pumpleistung berechnet und in eine Tabelle eingelesen werden, die als Stützstellen für eine Interpolation zur Einstellung neuer Pumpleistungen bei Schaltvorgängen dienen.

**6.** Verfahren nach einem der vorhergehenden Ansprüche,
**dadurch gekennzeichnet,**
**dass** für N Pumpquellen die effektiven Pumpleistungen vor dem Schaltvorgang $P_{eff,i}^{vor}$ jeder Pumpquelle mit dem Quotienten aus der mittleren Signal-Wellenlänge $\overline{\mu}_{signal}$ und der jeweiligen Pump-Wellenlänge $\mu_{pump}$ gemäß der Formel $\mu_{eff}^{vor} = \sum\limits_{i=1}^{N} \dfrac{\mu_{pump}}{\overline{\mu}_{signal}} \cdot P_{eff,i}^{vor}$ gewichtet und aufsummiert werden, und die effektive Gesamtpumpleistung nach dem Schaltvorgang $X_{eff}^{nach}$ aus den gemessenen Summenein- und -ausgangsleistungen vor und nach dem Schaltvorgang und dem Kalibrationsparameter $G_{norm}$ berechnet werden:

$$\mu_{eff}^{nach} = \mu_{eff}^{vor} + \frac{1}{G_{norm}} \cdot \left\{ P_{sig,out}^{nach} - P_{sig,in}^{nach} - P_{sig,out}^{vor} + P_{sig,in}^{vor} \right\}.$$

**Claims**

**1.** Method for adapting a pump power of an optical amplifier with the aid of which an optical wavelength multiplex signal with a number of channels of different wavelength is amplified, and in the case of which a change in input power or output power is detected, **characterized in that** after the change in the input power within a time interval that is shorter than the reaction time of the amplifier, the total input power and/or the total output power is measured and - starting from a previously prevailing, preferably stable state of the gain - a new value of the pump power is calculated therefrom in such a way that the influence of the wavelengths of the channels on the pump power required to maintain the gain profile is taken into account, and **in that** this calculated pump power is set such that the gain profile of the amplifier remains as constant as possible.

**2.** Method according to Claim 1, **characterized in that** the model for calculating the new pump power $P_{pump}^{nach}$ after a switching operation which changes the input power is defined by the following formulae:

$$P_{pump}^{nach} = P_0 \cdot \left[ \exp\left\{ \frac{P_{eff}^{nach}}{P_0} \right\} - 1 \right],$$

where

$$P_{eff}^{nach} = P_{eff}^{vor} + \frac{\overline{\mu}_{signal}}{\mu_{pump}} \cdot \frac{1}{G_{norm}} \cdot \left\{ P_{sig,out}^{nach} - P_{sig,in}^{nach} - P_{sig,out}^{vor} + P_{sig,in}^{vor} \right\}$$

and

$$P_{eff}^{vor} = P_0 \cdot \ln\left\{ 1 + \frac{P_{pump}^{vor}}{P_0} \right\}$$

the variables $(P_{sig,out/in}^{nach})$ being measured variables which are recorded within a time interval of a few 10 $\mu$s after the switching operation in which the gain of the amplifier changes only slightly, and

$(P_{sig,out}^{nach})$ denoting the total output power after the switching operation,

$(P_{sig,in}^{nach})$ denoting the total input power after the switching operation,

$(P_{sig,out}^{vor})$ denoting the total output power before the switching operation,

$(P_{sig,in}^{vor})$ denoting the total input power before the switching operation,

$(\overline{\mu}_{signal})$ and $(\mu_{pump})$ denoting the mean signal wavelength after the switching operation, or the pump wavelength,

$(G_{norm}, P_0)$ denoting two calibration parameters of the optical amplifier, $(P_{pump}^{vor})$ denoting the measured pump power before the switching operation, and $P_{eff}^{vor/nach}$ denoting the effective powers which do not take account of loss mechanisms.

**3.** Method as claimed in Claim 2, **characterized in that** assuming a mean gain of an EDFA amplifier without smoothing filter, the new effective pump power $P_{eff}^{nach}$ is calculated according to the formula

$$P_{eff}^{nach} = P_{eff}^{vor} + \frac{\overline{\mu}_{signal}}{\mu_{pump}} \cdot \frac{G_{sig} - 1}{G_{norm}} \cdot \left\{ P_{sig,in}^{nach} - P_{sig,in}^{vor} \right\},$$

the ratio $(G_{sig} = \frac{P_{sig,out}^{vor}}{P_{sig,in}^{vor}})$ characterizing the mean gain over the entire wavelength range, and being assumed as approximately constant before and after the switching operation.

**4.** Method according to one of the preceding claims, **characterized in that** the pump power is calculated and set successively in the event of a slow change in the input power.

**5.** Method according to one of the preceding claims, **characterized in that** during stable states there are calculated and read into a table new values of the pump power which serve as interpolation points for an interpolation in order to set new pump powers in the event of switching operations.

**6.** Method according to one of the preceding claims, **characterized in that** for N pump sources, the effective pump powers before the switching operation $P_{eff,i}^{vor}$ of each pump source are weighted with the quotient of the mean signal wavelength $\overline{\mu}_{signal}$ and the respective pump wavelength $\mu_{pump}$ in accordance with the formula

$\mu_{eff}^{vor} = \sum_{i=1}^{N} \frac{\mu_{pump}}{\overline{\mu}_{signal}} \quad P_{eff,i}^{vor}$ and are added up, and the effective total pump power, after the switching operation $X_{eff}^{nach}$ is calculated from the measured total input and output powers before and after the switching operation and the calibration parameter

$$G_{norm}:$$
$$\mu_{eff}^{nach} = \mu_{eff}^{vor} + \frac{1}{G_{norm}} \cdot \left\{ P_{sig,out}^{nach} - P_{sig,in}^{nach} - P_{sig,out}^{vor} + P_{sig,in}^{vor} \right\}.$$

## Revendications

1. Procédé d'adaptation d'une puissance de pompage d'un amplificateur optique, au moyen duquel un signal multiplexe à répartition en longueur d'onde comprenant plusieurs canaux de longueur d'onde différente est amplifié et dans lequel une modification de la puissance d'entrée ou de la puissance de sortie est détectée,
   **caractérisé en ce**
   **qu'**après la modification de la puissance d'entrée dans un intervalle de temps qui est plus petit que le temps de réaction de l'amplificateur, la puissance totale d'entrée et/ou la puissance totale de sortie est mesurée et à partir de cela - partant d'un état du gain régnant précédemment, de préférence stable - une nouvelle valeur de la puissance de pompage est calculée de manière à ce que l'influence des longueurs d'onde des canaux soit prise en compte sur la puissance de pompage nécessaire au maintien de l'allure de gain,
   et en ce que cette puissance de pompage calculée est réglée, de sorte que l'allure de gain de l'amplificateur reste la plus constante possible.

2. Procédé selon la revendication 1,
   **caractérisé en ce**
   **que** le modèle pour le calcul de la nouvelle puissance de pompage $P_{pump}^{nach}$ après une opération de commutation modifiant la puissance d'entrée est défini par la formule suivante :

$$P_{pump}^{nach} = P_0 \cdot \left[ \exp\left\{ \frac{P_{eff}^{nach}}{P_0} \right\} - 1 \right]$$

avec

$$P_{eff}^{nach} = P_{eff}^{vor} + \frac{\overline{\mu}_{signal}}{\mu_{pump}} \cdot \frac{1}{G_{norm}} \cdot \left\{ P_{sig,out}^{nach} - P_{sig,in}^{nach} - P_{sig,out}^{vor} + P_{sig,in}^{vor} \right\}$$

et

$$P_{eff}^{vor} = P_0 \cdot \ln\left\{ 1 + \frac{P_{pump}^{vor}}{P_0} \right\}$$

les grandeurs $\left( P_{sig,out/in}^{nach} \right)$ étant des grandeurs de mesure qui sont enregistrées dans une période de temps de quelques 10 $\mu$s après l'opération de commutation, pendant laquelle le gain de l'amplificateur se modifie seulement de manière minime, et

$\left( P_{sig,out}^{nach} \right)$ désignant la puissance totale de sortie après l'opération de commutation,

($P_{sig,in}^{nach}$) désignant la puissance totale d'entrée après l'opération de commutation,

($P_{sig,out}^{vor}$) désignant la puissance totale de sortie avant l'opération de commutation,

($P_{sig,in}^{vor}$) désignant la puissance totale d'entrée avant l'opération de commutation,

($\overline{\mu}_{signal}$) et ($\mu_{pump}$) désignant la longueur d'onde moyenne de signal après l'opération de commutation resp. la longueur d'onde de pompage, ($G_{norm}$, $P_0$) désignant deux paramètres de calibrage de l'amplificateur optique,

($P_{pump}^{vor}$) désignant la puissance de pompage mesurée avant l'opération de pompage et

$P_{eff}^{vor/nach}$ désignant des puissances effectives qui ne tiennent compte d'aucun mécanisme de perte.

3. Procédé selon la revendication 2,
**caractérisé en ce**
qu'à la condition d'un gain moyen d'un amplificateur EDFAS sans filtre de lissage, le calcul de la nouvelle puissance de pompage effective $P_{eff}^{nach}$ est réalisé selon la formule

$$P_{eff}^{nach} = P_{eff}^{vor} + \frac{\overline{\mu}_{signal}}{\mu_{pump}} \cdot \frac{G_{sig} - 1}{G_{norm}} \cdot \left\{ P_{sig,in}^{nach} - P_{sig,in}^{vor} \right\},$$

le rapport ($G_{sig} = \dfrac{P_{sig,out}^{vor}}{P_{sig,in}^{vor}}$) caractérisant le gain moyen sur la gamme totale de longueur d'onde et étant supposé comme approximativement constant avant et après l'opération de commutation.

4. Procédé selon l'une quelconque des revendications précédentes, **caractérisé en ce**
**que** lors de la modification lente de la puissance d'entrée, le calcul et le réglage de la puissance de pompage sont réalisés successivement.

5. Procédé selon l'une quelconque des revendications précédentes, **caractérisé en ce**
**que** pendant des états stables, de nouvelles valeurs de la puissance de pompage sont calculées et lues dans un tableau, celles-ci servant de points de base pour une interpolation pour le réglage de nouvelles puissances de pompages lors d'opérations de commutation.

6. Procédé selon l'une quelconque des revendications précédentes, **caractérisé en ce**
**que** pour N sources de pompage, les puissances de pompage effectives avant l'opération de pompage $P_{eff,i}^{vor}$ de chaque source de pompage sont pondérées avec les quotients provenant de la longueur d'onde moyenne de signal $\overline{\mu}_{signal}$ et de la longueur d'onde de pompage respective $\mu_{pump}$ selon la formule

$$\mu_{eff}^{vor} = \sum_{i=1}^{N} \frac{\mu_{pump}}{\mu_{signal}} \cdot P_{eff,i}^{vor}$$

et sont totalisées, et en ce que la puissance totale de pompage effective après l'opération de commutation $X_{eff}^{nach}$ est calculée à partir des puissances totales d'entrée et de sortie mesurées avant et après l'opération de commutation et à partir du paramètre de calibrage $G_{norm}$ :

$$\mu_{eff}^{nach} = p_{eff}^{vor} + \frac{1}{G_{norm}} \cdot \left\{ p_{sig,out}^{nach} - p_{sig,in}^{nach} - p_{sig,out}^{vor} + p_{sig,in}^{vor} \right\}.$$

## FIG 1

## FIG 2

## FIG 3

## FIG 4

FIG 5

FIG 6

## FIG 7

## FIG 8

## FIG 9

## FIG 10A

## FIG 10B

## FIG 10C

## FIG 10D

-5.0 dBm

Fall time 1.0e-003s

Gmax

-24.0 dBm

G (in dB)

t (in μs)

## FIG 10E

G (in dB)

t (in μs)

FIG 11

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6414788 B1
- US 6341034 B1
- US 6366393 B1
- US 20030053200 A1
- US 20010043389 A1
- US 6407854 B1
- EP 1079481 A

**In der Beschreibung aufgeführte Nicht-Patentliteratur**

- **NAKAJI H. ; NAKAI Y. ; SHIGEMATSU M ; NISHIMURA M.** Superior high-speed automatic gain controlled erbiumdoped fiber amplifier. *Optical Fiber Technology,* 2003, vol. 9, 25-35
- **B. MANN ; SCHIFFELGEN ; FRORIEP.** Einführung in die Regelungstechnik. Hanser-Verlag, 1997